# EUROPEAN PATENT SPECIFICATION

(11) **EP 3 845 608 B1**
(45) Date of publication and mention of the grant of the patent: **18.09.2024**
(21) Application number: 19856281.1
(22) Date of filing: 28.08.2019
(51) Int. Cl.: C09D 1/00, C09D 5/00, C09D 5/02, C09D 5/10, C09D 7/48, C09D 7/61, C09D 183/04

(54) **RUST PREVENTIVE COATING COMPOSITION AND USE OF SAME**
ROSTVERHINDERNDE BESCHICHTUNGSZUSAMMENSETZUNG UND VERWENDUNG DAVON
COMPOSITION DE REVÊTEMENT ANTI-ROUILLE ET SON UTILISATION

(30) Priority: 31.08.2018 JP 2018162870
(43) Date of publication of application: 07.07.2021
(73) Proprietor: Chugoku Marine Paints, Ltd., Hiroshima 739-0652 (JP)
(72) Inventor: INAGAKI, Taichi, Otake-shi Hiroshima 739-0652 (JP)
(74) Representative: Hoffmann Eitle
(86) International application number: PCT/JP2019/033673
(87) International publication number: WO 2020/045487

(56) References cited:
- EP-A1- 3 543 374
- EP-A1- 3 705 544
- WO-A1-2012/036210
- WO-A1-2014/014063
- WO-A1-2014/119784
- WO-A1-2017/129784
- WO-A1-2018/092244
- WO-A1-2019/245326
- CN-A- 102 888 136
- CN-A- 106 700 917
- JP-A- 2002 053 769
- JP-A- 2014 515 771
- JP-A- H06 200 188
- JP-A- H06 200 188
- JP-A- H11 116 856

## Description

### Technical Field

The present invention relates to an anti-rust coating composition and use thereof.

### Background Art

A surface of a steel plate has been heretofore coated with a primary anti-rust coating composition (hereinafter "coating composition" is also referred to simply as "coating") in order to prevent rusting during construction of a large steel structure such as a ship, a marine structure, a plant, a bridge, or an overland tank. As such a primary anti-rust coating, an organic primary anti-rust coating such as a wash primer, a non-zinc epoxy primer, or an epoxy zinc-rich primer, and an inorganic zinc primary anti-rust coating containing a siloxane-based binder and a zinc powder are known. Among these primary anti-rust coatings, the inorganic zinc primary anti-rust coating having excellent weldability is most widely used.

However, the inorganic zinc primary anti-rust coating containing a siloxane-based binder and a zinc powder contains a large amount of volatile organic solvent. In recent years, in many countries, reduction of environmental load is required, and a primary anti-rust coating that emits little or almost no volatile organic solvent is desired. Therefore, a method using water instead of a volatile organic solvent (water-based method) has been studied. Examples of such a water-based inorganic zinc coating composition are described in Patent Literatures 1 to 3.

Patent Literature 1 discloses a water-based coating composition containing an inorganic colloidal silica-based binder, a zinc powder, an aqueous aluminum pigment, and a phosphate-based pigment. Patent Literatures 2 and 3 disclose a water-based coating composition containing an inorganic silane-based binder, a zinc powder, and a conductive pigment.

### Citation List

### Patent Literature

Patent Literature 1: JP 2002-053769 A
Patent Literature 2: JP 2014-515771 A
Patent Literature 3: WO 2017/129784 A

### Summary of Invention

### Technical Problem

A substrate coated with an inorganic zinc anti-rust coating may then be top-coated with a heavy duty coating such as an epoxy-based coating, and finally submerged in seawater or the like to be subjected to electric anticorrosion. In an environment in which the substrate has been subjected to electric anticorrosion, peeling (creep) of a coating film from a damaged part is a problem, and therefore the inorganic zinc anti-rust coating is required to have electric anticorrosion resistance such that peeling of the coating film is as small as possible.

A conventional inorganic zinc anti-rust coating containing a large amount of volatile organic solvent (hereinafter, also referred to as "solvent-based inorganic zinc anti-rust coating") has been able to sufficiently secure electric anticorrosion resistance. However, an inorganic zinc anti-rust coating using water (hereinafter, also referred to as "water-based inorganic zinc anti-rust coating") has insufficient electric anticorrosion resistance.

A substrate coated with the water-based inorganic zinc anti-rust coating is usually welded in a processing step in a similar manner to a substrate coated with the conventional solvent-based inorganic zinc anti-rust coating. When there are many welding defects (blow holes and the like), the welding defects hinder productivity. Therefore, it is also required for the water-based inorganic zinc anti-rust coating not to impair weldability. Furthermore, the substrate coated with the water-based inorganic zinc anti-rust coating is exposed to a corrosive environment such as outdoors during a construction step, and therefore anti-rust properties with a single coating film is also required.

As a result of studies by the present inventors, it has been difficult for a conventional water-based inorganic zinc anti-rust coating to simultaneously achieve electric anticorrosion resistance, and weldability and anti-rust properties as a single coating film.

An object of the present invention is to solve the above problems in prior art, and to provide an anti-rust coating composition capable of forming a coating film having excellent electric anticorrosion resistance, and weldability and anti-rust properties as a single coating film.

### Solution to Problem

The present inventors have found that the above problems can be solved by an anti-rust coating composition having the following composition, and have completed the present invention. The present invention provides an anti-rust coating composition, an anti-rust coating composition kit, an anti-rust coating film, a primary anti-rust coating film, substrate with an anti-rust coating film, and a method for producing a substrate with an anti-rust coating film. The anti-rust coating composition comprises: a binder (A) comprising silica nanoparticles; at least one zinc-based powder (B) selected from a zinc powder and a zinc alloy powder; an aluminum phosphate-based compound (C); a conductive pigment (D); and water, wherein the mass ratio [(B)/{(C) + (D)}] of the zinc-based powder (B) to the total of the aluminum phosphate-based compound (C) and the conductive pigment (D) 7.0 and wherein the conductive pigment (D) is zinc is 0.1 to oxide.

Further embodiments of the anti-rust coating composition, an anti-rust coating composition kit, an anti-rust coating film, a primary anti-rust coating film, substrate with an anti-rust coating film, and a method for producing a substrate with an anti-rust coating film of the present invention are described below and in the appended claims.

### Advantageous Effects of Invention

The anti-rust coating composition of the present invention can form a coating film having excellent electric anticorrosion resistance when the anti-rust coating composition is top-coated with a heavy duty coating such as an epoxy-based coating, and excellent weldability and anti-rust properties as a single coating film.

### Brief Description of Drawings

Fig. 1 is a diagram illustrating a sandblasted plate coated with an anti-rust coating composition, used in a weldability test in the column of Examples.
Fig. 2 is a diagram illustrating welding conditions of the sandblasted plate.

### Description of Embodiments

Hereinafter, an anti-rust coating composition and the like of the present invention will be described in detail.

### [Anti-rust coating composition]

The anti-rust coating composition of the present invention (hereinafter, also referred to as "the present composition") comprises: a binder (A) comprising silica nanoparticles; at least one zinc-based powder (B) selected from a zinc powder and a zinc alloy powder; an aluminum phosphate-based compound (C); a conductive pigment (D); and water. The present composition can further contain a pigment (E) other than the (B), (C), and (D).

### <Binder (A) comprising silica nanoparticles>

The binder (A) comprises silica nanoparticles.

The silica nanoparticles are not particularly limited as long as having a nano-sized average particle size. The average particle size of the silica nanoparticles is usually 4 to 400 nm. The average particle size can be measured by a dynamic light scattering method. Examples of the silica nanoparticles include amorphous aqueous silica nanoparticles.

The binder (A) preferably further contains at least one selected from an alkoxysilane, a hydrolyzate of the alkoxysilane, and a hydrolytic condensate of the alkoxysilane (hereinafter, also referred to as "alkoxysilane-based component"). The binder (A) may contain at least one selected from a cross-linking agent, a curing catalyst, and an additive in order to uniformly form a film of the silica nanoparticles.

Examples of the alkoxysilane-based component preferably contained in the binder (A) include a tetraalkoxysilane, an alkylalkoxysilane, a phenylalkoxysilane, a mercaptoalkylalkoxysilane, an aminoalkylalkoxysilane, a ureidoalkylalkoxysilane, a thiocyanatoalkylalkoxysilane, a carboxyalkylalkoxysilane, a glycidyloxyalkylalkoxysilane, bis(trimethoxysilylpropyl) amine, a bis(alkoxysilylalkyl) amine, hydrolyzates thereof, and hydrolytic condensates thereof.

The number of carbon atoms of an alkoxy group in the alkoxysilane is usually 5 or less, and preferably 3 or less.

Preferable examples of the tetraalkoxysilane include tetramethoxysilane, tetraethoxysilane, tetrapropoxysilane, tetraisopropoxysilane, tetrabutoxysilane, and tetraisobutoxysilane.

Preferable examples of the alkylalkoxysilane include a C1-C16-alkylalkoxysilane. More preferable examples thereof include a C1-C16-alkyltrialkoxysilane. Particularly preferable examples thereof include methyltrimethoxysilane, methyltriethoxysilane, methyltripropoxysilane, ethyltrimethoxysilane, ethyltriethoxysilane, n-propyltrimethoxysilane (PTMO), n-propyltriethoxysilane (PTEO), isobutyltrimethoxysilane (IBTMO), isobutyltriethoxysilane (IBTEO), octyltrimethoxysilane (OCTMO), and octyltriethoxysilane (OCTEO).

Preferable examples of the phenylalkoxysilane include phenyltrialkoxysilane. More preferable examples thereof include phenyltrimethoxysilane and phenyltriethoxysilane.

Preferable examples of the mercaptoalkylalkoxysilane include 3-mercaptopropyltrimethoxysilane (MTMO) and 3-mercaptopropyltriethoxysilane (MTEO).

Preferable examples of the aminoalkylalkoxysilane include 3-aminopropyltrimethoxysilane (AMMO), 3-aminopropyltriethoxysilane (AMEO), N-(2-aminoethyl)-3-aminopropyltrimethoxysilane (DAMO), N-(2-aminoethyl)-3-aminopropyltriethoxysilane, N,N'-diaminoethyl-3-aminopropyltrimethoxysilane (TriAMO), and N,N'-diaminoethyl-3-aminopropyltriethoxysilane.

Preferable examples of the ureidoalkylalkoxysilane include 3-ureidopropyltrimethoxysilane and 3-ureidopropyltriethoxysilane.

Preferable examples of the thiocyanatoalkylalkoxysilane include 3-thiocyanatopropyltrimethoxysilane and 3-thiocyanatopropyltrimethoxysilane.

Preferable examples of the carboxyalkylalkoxysilane include 3-carboxypropyltrimethoxysilane and 3-carboxypropyltriethoxysilane.

Examples of the glycidyloxyalkylalkoxysilane preferably include 3-glycidyloxypropyltrimethoxysilane and 3-glycidyloxypropyltriethoxysilane.

Examples of the bis(alkoxysilylalkyl) amine preferably include bis(trimethoxysilylpropyl) amine and bis(triethoxysilylpropyl) amine.

Examples of the cross-linking agent include n-propylzirconate, butyl titanate, and titanium acetylacetonate. The cross-linking agent may be used singly or in combination of two or more types thereof. Examples of the curing catalyst include an organic acid such as formic acid, acetic acid, propionic acid, or maleic acid, an inorganic acid such as hydrochloric acid, nitric acid, sulfuric acid, or phosphoric acid, caustic soda, caustic potash, N,N-dimethylethanolamine, and tetrakis(triethanolamine) zirconate. The curing catalyst may be used singly or in combination of two or more types thereof.

The binder (A) is preferably an inorganic/organic hybrid binder comprising silica nanoparticles and an alkoxysilane-based component and further containing a cross-linking agent and/or a curing catalyst.

When the present composition containing the binder (A) is prepared, a water-based binder comprising the binder (A) and water can be used. As such a water-based binder, an aqueous silica sol can be used. Examples of a commercially available product thereof include "Dynasylan SIVO series" (manufactured by Evonik Japan Co., Ltd.) and "Snowtex series" (manufactured by Nissan Chemical Corporation). In particular, "Dynasylan SIVO140" (SiO₂ content ratio 14.25% by mass, solid content concentration 22.5% by mass) is preferable because Dynasylan SIVO140 can form an anti-rust coating film that can be cured at room temperature and has a film thickness of micron order or more, and the anti-rust coating film exhibits excellent performance.

The water-based binder may be prepared by adding an aqueous silica sol to a commercially available inorganic/organic hybrid water-based binder (for example, the above Dynasylan SIVO140). By relatively increasing the content ratio of SiO₂ in the solid content of the water-based binder in this way, the zinc-based powder (B) can effectively exhibit a sacrificial anticorrosive action, and improves electric anticorrosion resistance when a coating film is top-coated with a heavy duty coating or the like, and anti-rust properties as a single coating film.

As the aqueous silica sol optionally added to the inorganic/organic hybrid water-based binder, an acidic, neutral, or alkaline silica sol can be used. However, when the inorganic/organic hybrid water-based binder is acidic (for example, in a case of "Dynasylan SIVO140"), the optionally added aqueous silica sol is preferably an acidic silica sol from a viewpoint of storage stability after mixing.

The optionally added aqueous silica sol may contain, together with amorphous aqueous silica nanoparticles, another solgel-forming aqueous elemental oxide, for example, at least one oxide selected from aluminum oxide, silicon/aluminum oxide, titanium oxide, zirconium oxide, and zinc oxide. Among these compounds, the optionally added aqueous silica sol preferably contains silicon/aluminum oxide. The silica nanoparticles contained in the optionally added aqueous silica sol usually have an average particle size of 4 to 400 nm. The average particle size can be measured by a dynamic light scattering method.

Examples of a commercially available product of such an aqueous silica sol include "Snowtex O", "Snowtex OL", and "Snowtex OYL", in which a surface of a dispersoid of an acidic silica sol is an anionic acidic silica sol, and "Snowtex AK", "Snowtex AK-L", and "Snowtex AK-YL" (manufactured by Nissan Chemical Corporation), in which a surface is a cationic acidic silica sol, but are not limited thereto.

The content ratio of SiO₂ is usually 0.5 to 30.0% by mass, preferably 1.0 to 20.0% by mass, and more preferably 2.0 to 15.0% by mass in the solid content of the present composition or in an anti-rust coating film formed from the present composition. The content ratio of SiO₂ within the above range is preferable from viewpoints of electric anticorrosion resistance, and weldability and anti-rust properties as a single coating film. The content ratio of SiO₂ in the solid content of the present composition and the content ratio of SiO₂ in the anti-rust coating film mean the total content ratio of a SiO₂ component derived from the silica nanoparticles and a SiO₂ component derived from hydrolytic condensation of the alkoxysilane-based component. Examples of the SiO₂ component derived from the silica nanoparticles include a SiO₂ component derived from an optionally added aqueous silica sol.

The solid content of the present composition refers to a component obtained by removing a volatile component such as water or an organic solvent, and refers to a component that remains as a coating film when the present composition is cured.

The content mass ratio of the silica nanoparticles to the alkoxysilane-based component (silica nanoparticles/alkoxysilane-based component) in the present composition is preferably 0.1 to 3.0, and more preferably 0.2 to 2.0. Examples of the silica nanoparticles include silica nanoparticles contained in an optionally added aqueous silica sol.

### <Zinc-based powder (B)>

The zinc-based powder (B) is at least one selected from a zinc powder and a zinc alloy powder. The zinc-based powder (B) acts as an anti-rust pigment for preventing rusting of a steel material.

Examples of the zinc alloy powder include a powder of an alloy of zinc and at least one selected from aluminum, magnesium, and tin. Preferable examples thereof include a zinc-aluminum alloy and a zinc-tin alloy.

Examples of the shape of a particle constituting the zinc-based powder (B) include various shapes such as a spherical shape and a flaky shape. Examples of a commercially available product of a zinc powder having a spherical particle shape include "F-2000" (manufactured by Honjo Chemical Co., Ltd.). Examples of a commercially available product of a zinc powder having a flaky particle shape include "STANDART Zinc flake GTT" and "STANDART Zinc flake G" (manufactured by ECKART GmbH). Examples of a commercially available product of a zinc alloy powder having a flaky particle shape include "STAPA 4 ZNAL7", which is an alloy of zinc and aluminum, and "STAPA 4 ZNSN30" (manufactured by ECKART GmbH), which is an alloy of zinc and tin.

As the zinc-based powder (B), one or both of a zinc powder and a zinc alloy powder can be used, and each of the zinc powder and the zinc alloy powder may be used singly or in combination of two or more types thereof.

A conventional water-based inorganic zinc anti-rust coating usually contains an alkoxysilane having an organic functional group and another organic binder as a part of a binder component, and contains an additive such as a thixotropic agent, a defoaming agent, a wetting agent, a surface conditioner, a precipitation inhibitor, a sagging inhibitor, a desiccant, a fluidity modifier, a dispersant, or a color separation inhibitor in a coating. These components may interfere with a sacrificial anticorrosive action of a zinc powder by being in contact with or covering the zinc powder. Furthermore, these components may affect adhesiveness between the coating film and a top coating film by remaining in the coating film. In addition, in the case of the water-based inorganic zinc anti-rust coating, the zinc powder is dispersed in a large amount of water, and therefore there is a disadvantage that a surface is oxidized and the sacrificial anticorrosive action easily decreases. Due to these factors, the conventional water-based inorganic zinc anti-rust coating has insufficient electric anticorrosion resistance when the conventional water-based inorganic zinc anti-rust coating is top-coated with a heavy duty coating such as an epoxy-based coating. According to various requirements described below, the present composition can obtain good electric anticorrosion resistance while being a water-based inorganic zinc anti-rust coating.

In the present composition or in an anti-rust coating film formed from the present composition, the mass ratio [(B)/{(C) + (D)}] of the zinc-based powder (B) to the total of the aluminum phosphate-based compound (C) and the conductive pigment (D) is 0.1 to 7.0, preferably 0.5 to 7.0, and more preferably 1.0 to 6.0.

The mass ratio [(B)/{(C) + (D)}] within the above range is preferable from viewpoints of electric anticorrosion resistance, and weldability and anti-rust properties as a single coating film. When the mass ratio exceeds the upper limit of the above range, anti-rust properties, electric anticorrosion resistance, and weldability tend to be poor. Meanwhile, when the mass ratio is less than the lower limit of the above range, anti-rust properties tend to be poor.

In the present composition or in an anti-rust coating film formed from the present composition, the mass ratio [(B)/{(C) + (D) + (E)}] of the zinc-based powder (B) to the total of the aluminum phosphate-based compound (C), the conductive pigment (D), and the pigment (E) is preferably 0.5 to 5.5.

The mass ratio [(B)/((C) + (D) + (E))] within the above range is preferable from viewpoints of electric anticorrosion resistance, and weldability and anti-rust properties as a single coating film. When the mass ratio of the present composition exceeds the upper limit of the above range, the ratio of the zinc-based powder (B) in a formed anti-rust coating film increases. Therefore, the amount of zinc fume generated during welding may increase to adversely affect the health of a welding worker, and weldability may be poor. Meanwhile, when the mass ratio of the present composition is less than the lower limit of the above range, the ratio of the ((C) + (D) + (E)) components in a formed anti-rust coating film increases. Therefore, contact between particles of the zinc-based powder (B) is sparse, it is difficult to obtain a sacrificial anticorrosive effect, and anti-rust properties and electric anticorrosion resistance may be insufficient.

The zinc-based powder (B) may be used singly or in combination of two or more types thereof.

The content ratio of the zinc-based powder (B) is usually 80% by mass or less, preferably 40 to 70% by mass, and more preferably 45 to 60% by mass in the solid content of the present composition or in an anti-rust coating film formed from the present composition. Since the conductive pigment (D) is used in the present invention, a good sacrificial anticorrosive action can be obtained even if the content ratio of the zinc-based powder (B) is within the above range.

### <Aluminum phosphate-based compound (C)>

The aluminum phosphate-based compound (C) not only acts as an anti-rust pigment that prevents rusting of a steel material, but also effectively improves salt water spraying anticorrosive properties and electric anticorrosion resistance when an anti-rust coating film formed of the present composition is top-coated with a heavy duty coating or the like. For example, by using the aluminum phosphate-based compound (C), it is possible to improve electric anticorrosion resistance that is difficult with a conventional water-based inorganic zinc anti-rust coating, and it is possible to achieve performance at about the same level as a conventional solvent-based inorganic zinc anti-rust coating.

Examples of the aluminum phosphate-based compound (C) include aluminum pyrophosphate, aluminum dihydrogen tripolyphosphate, aluminum metaphosphate, aluminum orthophosphate, and aluminum phosphite. Among these compounds, a condensed aluminum phosphate such as aluminum pyrophosphate, aluminum dihydrogen tripolyphosphate, or aluminum metaphosphate is preferable, and aluminum dihydrogen tripolyphosphate is more preferable.

In the present invention, an aluminum phosphate-based pigment obtained by treating the aluminum phosphate-based compound (C) with a treatment agent may be used. Here, examples of the treatment include a surface treatment, a modifying treatment, and a mixing treatment. An aluminum phosphate-based pigment obtained by treating a condensed aluminum phosphate such as aluminum pyrophosphate, aluminum dihydrogen tripolyphosphate, or aluminum metaphosphate is preferable. In the present invention, an anti-rust coating composition containing the aluminum phosphate-based pigment also corresponds to the anti-rust coating composition containing the aluminum phosphate-based compound (C).

The treatment can be performed, for example, in order to adjust the pH of the aluminum phosphate-based compound (C) or the elution amount of phosphate ions. Examples of the treatment agent used in the treatment include a pigment containing at least one selected from Si, Zn, Mg, and Ca among the conductive pigment (D) and the pigment (E) described later, and molybdic acid. The treatment agent used in the above treatment is preferably a pigment containing Mg from a viewpoint of improving electric anticorrosion resistance.

The aluminum phosphate-based pigment is preferably a pigment obtained by treating condensed aluminum phosphate, and more preferably a pigment obtained by treating aluminum dihydrogen tripolyphosphate. The aluminum phosphate-based pigment is more preferably a pigment obtained by treating condensed aluminum phosphate with molybdic acid, and more preferably a pigment obtained by treating aluminum dihydrogen tripolyphosphate with molybdic acid from a viewpoint of anticorrosive properties. The aluminum phosphate-based pigment is more preferably a pigment obtained by treating condensed aluminum phosphate with Mg, and more preferably a pigment obtained by treating aluminum dihydrogen tripolyphosphate with Mg from a viewpoint of improving electric anticorrosion resistance.

Note that, for example, in calculation of the mass ratio [(B)/{(C) + (D)}] or the content ratio of each component, components other than the aluminum phosphate-based compound (C) (a treatment agent used in the above treatment or a mixture thereof) in the aluminum phosphate-based pigment is included in the conductive pigment (D) or the pigment (E) described later.

Examples of a commercially available product of the aluminum phosphate-based pigment include "K-WHITE #84" (manufactured by Tayca Corporation) obtained by surface-treating aluminum dihydrogen tripolyphosphate with a treatment agent containing Si and Zn, "K-WHITE CZ610" (manufactured by Tayca Corporation) obtained by surface-treating aluminum dihydrogen tripolyphosphate with a treatment agent containing Ca and Zn, "K-WHITE G105" (manufactured by Tayca Corporation) obtained by surface-treating aluminum dihydrogen tripolyphosphate with a treatment agent containing magnesium, and "LF Bowsei PM-303W" (manufactured by Kikuchi Color & Chemicals Corporation) obtained by modifying aluminum dihydrogen tripolyphosphate with a treatment agent containing molybdic acid.

The aluminum phosphate-based compound (C) or the aluminum phosphate-based pigment may be used singly or in combination of two or more types thereof.

The content ratio of the aluminum phosphate-based compound (C) is usually 0.5 to 70% by mass, preferably 1 to 50% by mass, and more preferably 2 to 40% by mass in the solid content of the present composition or in an anti-rust coating film formed from the present composition. The content ratio of the aluminum phosphate-based compound (C) within the above range makes anti-rust properties and electric anticorrosion resistance of an obtained anti-rust coating film excellent.

### <Conductive pigment (D)>

Use of the conductive pigment (D) in combination with the zinc-based powder (B) and the aluminum phosphate-based compound (C) improves the sacrificial anticorrosive action of the zinc-based powder (B) and anti-rust properties.

Hereinafter, the sacrificial anticorrosive action will be specifically described. In the anti-rust coating composition, in order to further exhibit the sacrificial anticorrosive effect of the zinc-based powder, it is important to efficiently supply electrons generated when zinc is ionized to a substrate such as a steel material. Usually, this current effect can be obtained by bringing zinc particles in the coating film into close contact with each other. In particular, a case where the content ratio of the zinc-based powder in the coating film is large (for example, more than 80% by mass) or a case where the content ratio of an organic resin in the binder is small or the organic resin is absent is suitable for contact of the zinc particles with each other. However, when the content ratio of the zinc-based powder in the coating film is small (for example, 80% by mass or less) or when the content ratio of an organic resin in the binder is relatively large, the contact of the zinc particles with each other is reduced, and the sacrificial anticorrosive action decreases. In the present invention, by inclusion of the conductive pigment (D) in the coating film, the conductive pigment (D) plays a role of connecting particles of the zinc-based powder (B) to each other, and a current effect thereof can be supplemented. As a result, a sacrificial anticorrosive effect can be obtained effectively, and good anti-rust properties can be exhibited.

In the present invention, the conductive pigment (D) is zinc oxide, which is inexpensive and has high conductivity.

Examples of a commercially available product of zinc oxide include "zinc oxide grade #1" (manufactured by Sakai Chemical Industry Co., Ltd.) and "zinc oxide grade #3" (manufactured by Hakusui Tech Co., Ltd.).

The content ratio of the conductive pigment (D) is usually 0.1 to 50% by mass, preferably 1 to 40% by mass, and more preferably 2 to 30% by mass in the solid content of the present composition or in an anti-rust coating film formed from the present composition. The content ratio of the conductive pigment (D) in the present composition within the above range makes anti-rust properties of an obtained coating film excellent.

### <Pigment (E)>

The pigment (E) is a pigment other than the above-described (B), (C), and (D), and is, for example, an extender pigment, a coloring pigment, or an anti-rust pigment other than the above-described (B), (C) and (D).

The pigment (E) may be used singly or in combination of two or more types thereof.

When the pigment (E) is used, the content ratio of the pigment (E) is usually 1.0 to 60.0% by mass, preferably 2.0 to 50.0% by mass, and more preferably 3.0 to 40.0% by mass in the solid content of the present composition or in an anti-rust coating film formed from the present composition.

### (Extender pigment)

The extender pigment is not particularly limited as long as being an inorganic pigment used in a general coating, and examples thereof include potassium feldspar, soda feldspar, kaolin, mica, silica, a glass powder, talc, barium sulfate, aluminum oxide, zirconium silicate, wollastonite, and diatomaceous earth. The extender pigment may be an inorganic pigment that generates gas by thermal decomposition. The extender pigment is preferably potassium feldspar, kaolin, silica, or a glass powder, and more preferably kaolin from a viewpoint of improving electric anticorrosion resistance. When kaolin is used, the content ratio thereof is usually 0.1 to 60% by mass, preferably 1 to 40% by mass, and more preferably 5 to 30% by mass in the solid content of the present composition or in an anti-rust coating film formed from the present composition from a viewpoint of improving electric anticorrosion resistance. Note that as the silica classified into the extender pigment, silica particles having an average particle size of 1 to 10 um can be used usually.

Examples of a commercially available product of the extender pigment include "Ceramics Powder OF-T" (manufactured by Kinsei Matec Co., Ltd.), which are potassium feldspar, "Mica Powder 100 Mesh" (manufactured by Fukuoka Talc Co., Ltd.), "Satintone W" (manufactured by BASF), which is kaolin, "A-PAX45M" (manufactured by Kinsei Matec Co., Ltd.), which are zirconium silicate, "FC-1 talc" (manufactured by Fukuoka Talc Co., Ltd.), "Silica QZ-SW" (manufactured by Goto Kozan Co. Ltd.), "Precipitated barium sulfate 100" (manufactured by Sakai Chemical Industry Co., Ltd.), and "Radiolite" (Showa Chemical Industry Co., Ltd.), which is diatomaceous earth.

The extender pigment may be used singly or in combination of two or more types thereof.

### <<Glass powder>>

Generally, a glass powder is obtained by heating and melting a compound constituting glass at about 1,000 to 1,100°C for a predetermined time, cooling the compound, and then sizing the compound into a powder shape by a pulverizer. Examples of the compound constituting glass include SiO₂, B₂O₃, Al₂O₃, ZnO, BaO, MgO, CaO, SrO, Bi₂O₃, Li₂O, Na₂O, K₂O, PbO, P₂O₅, In₂O₃, SnO, CuO, Ag₂O, V₂O₅, and TeO₂. PbO can also be used as the compound constituting glass, but it is desirable not to use PbO because PbO may adversely affect the environment.

The glass powder having a softening point of 400 to 800°C is preferable because the glass powder acts as an antioxidant of the zinc-based powder (B) when an anti-rust coating film formed of the present composition is heated at a high temperature of 400 to 900°C. The softening point of the glass powder is determined by a method for determining a softening point by a temperature when a viscosity coefficient η reaches 10^{7.6} using a Littleton viscometer.

Examples of a commercially available product of the glass powder include "NB122A" (softening point 400°C), "AZ739" (softening point 605°C), and "PFL20" (softening point 700°C) (manufactured by Central Glass Co., Ltd.).

B₂O₃, which is one of compounds constituting glass, is a glassy substance having a softening point of about 450°C by itself, and can be used as a glass powder. Examples of a commercially available product of B₂O₃ include "boron oxide" (Cica first-class reagent manufactured by Kanto Chemical Co., Inc.).

The glass powder may be used singly or in combination of two or more types thereof.

When the glass powder is used, the content ratio of the glass powder is preferably 0.05 to 26% by mass, more preferably 0.15 to 20% by mass, and still more preferably 0.5 to 15% by mass in the solid content of the present composition or in an anti-rust coating film formed from the present composition.

### <<Inorganic pigment that generates gas by thermal decomposition>>

The inorganic pigment that generates gas by thermal decomposition is, for example, an inorganic pigment that generates a gas such as CO₂ or F₂ by thermal decomposition at 500 to 1,500°C. Examples of the inorganic pigment that generates gas by thermal decomposition include calcium carbonate, magnesium carbonate, strontium carbonate, and calcium fluoride. In a case where the present composition contains such an inorganic pigment, when a substrate coated with a coating film of the present composition is welded, in a melting pool during welding, a coating film-forming solid content of the binder (A) comprising silica nanoparticles and bubbles generated by gases derived from the components (B), (C), (D), and (E) can be removed from the melting pool together with a gas derived from the inorganic pigment.

Examples of a commercially available product of the inorganic pigment that generate gas by thermal decomposition include "Fluorite 400 Mesh" (manufactured by Kinsei Matec Co., Ltd.), "NS #400" (manufactured by Nitto Funka Kogyo K.K.), "magnesium carbonate" (manufactured by Tomita Pharmaceutical Co., Ltd.), and "strontium carbonate A" (manufactured by Honjo Chemical Corporation).

The inorganic pigment that generates gas by thermal decomposition may be used singly or in combination of two or more types thereof.

### (Coloring pigment)

The coloring pigment other than the above-described (B), (C), and (D) are at least one selected from an inorganic coloring pigment and an organic coloring pigment. The inorganic coloring pigment is not particularly limited as long as being an inorganic coloring pigment other than the conductive pigment (D), and examples thereof include: a metal oxide such as titanium oxide or iron oxide; and a composite oxide such as copper/chromium/manganese, iron/manganese, iron/chromium, cobalt/titanium/nickel/zinc, or cobalt/chromium/titanium/zinc. Examples of the organic coloring pigment include an organic coloring pigment such as phthalocyanine green or phthalocyanine blue.

Examples of a commercially available product of the coloring pigment include "TITONE R-5N" (manufactured by Sakai Chemical Industry Co., Ltd.), "Red iron oxide No. 404" (manufactured by Morishita Bengara Kogyo Co., Ltd.), "Daipyroxide Black #9510" (manufactured by Dainichiseika Color & Chemicals Mfg. Co., Ltd.), "Heliogen Green L8690" (manufactured by BASF Japan Ltd.), and "FASTOGEN Blue 5485" (manufactured by DIC Corporation).

The coloring pigment may be used singly or in combination of two or more types thereof.

### (Anti-rust pigment)

Examples of an anti-rust pigment other than the above-described (B), (C), and (D) include molybdenum, a molybdenum compound, a zinc phosphate-based compound, a calcium phosphate-based compound, a magnesium phosphate-based compound, a zinc phosphite-based compound, a calcium phosphite-based compound, a strontium phosphite-based compound, a zinc cyanamide-based compound, and a borate compound.

### <<Molybdenum and molybdenum compound>>

When a steel material coated with the present composition is exposed outdoors, the zinc-based powder (B) in the coating film reacts with water, oxygen, and carbon dioxide gas, and may thereby generate a white rust (a mixture of zinc oxide, zinc hydroxide, zinc carbonate, and the like) on a surface of the coating film. When a top coating film formed of a top coating is formed on the surface of the coating film on which the white rust has been generated, adhesiveness between the coating films may decrease. To solve such a problem, it is necessary to remove the white rust on the surface of the coating film by an appropriate means before top coating, but such removal work is not allowed at all in some requirements in working steps or some specific uses.

Molybdenum (metal molybdenum) and a molybdenum compound act as an antioxidant (so-called white rust inhibitor) of the zinc-based powder (B) for reducing generation of the white rust in the anti-rust coating film formed. The present composition can contain one or both of molybdenum and a molybdenum compound.

Examples of the molybdenum compound include a molybdenum oxide such as molybdenum trioxide, molybdenum sulfide, molybdenum halide, molybdic acid, ammonium molybdate, phosphomolybdic acid, silicomolybdic acid, a metal salt of molybdic acid such as zinc molybdate, an alkali metal salt of molybdic acid, an alkali metal salt of phosphomolybdic acid, an alkali metal salt of silicomolybdic acid, an alkaline earth metal salt of molybdic acid such as calcium molybdate, an alkaline earth metal salt of phosphomolybdic acid, an alkaline earth metal salt of silicomolybdic acid, a manganese salt of molybdic acid, a manganese salt of phosphomolybdic acid, a manganese salt of silicomolybdic acid, a basic nitrogen-containing compound salt of molybdic acid, a basic nitrogen-containing compound salt of phosphomolybdic acid, and a basic nitrogen-containing compound salt of silicomolybdic acid.

The molybdenum compound may be used singly or in combination of two or more types thereof.

When one or both of molybdenum and the molybdenum compound are used, the total content of molybdenum and the molybdenum compound is preferably 0.05 to 5.0 parts by mass, more preferably 0.3 to 3.0 parts by mass, and still more preferably 0.5 to 2.0 parts by mass with respect to 100 parts by mass of the zinc-based powder (B). The content within the above range brings about a sufficient antioxidant action of the zinc-based powder (B), prevents a decrease in the activity of the zinc-based powder (B), and can maintain the anticorrosive properties of the coating film.

The anti-rust pigment may be used singly or in combination of two or more types thereof.

### <Other components>

The present composition may appropriately contain an additive and the like as other components as long as the object and effect of the present invention are not impaired.

Examples of the additive include a thixotropic agent, a defoaming agent, a wetting agent, a surface conditioner, a precipitation inhibitor, a sagging inhibitor, a desiccant, a fluidity modifier, a dispersant, a color separation inhibitor, an anti-skinning agent, a plasticizer, and a UV absorber. Specific examples of the additive for a coating include: a polycarboxylic acid-based thixotropic agent, a fatty acid polyamide-based thixotropic agent, a polyethylene oxide-based thixotropic agent, a urethane association-based thixotropic agent, an acrylic polymer-based thixotropic agent, a modified urea-based thixotropic agent; a modified silicone-based defoaming agent, a polymer-based defoaming agent; a modified silicone-based surface conditioner, an acrylic polymer-based surface conditioner, a fluorine-containing polymer-based surface conditioner, a dialkylsulfosuccinate-based surface conditioner; and a clay-based precipitation inhibitor such as hectrite, bentonite, or smectite.

The additive may be used singly or in combination of two or more types thereof.

### <Water>

The present composition contains water in order to dissolve or disperse the binder (A) comprising silica nanoparticles. Here, the water may be water used when the first agent described later is manufactured, or water added in a preparation process of mixing the binder (A) with the zinc-based powder (B), the aluminum phosphate-based compound (C), and the conductive pigment (D), which are essential components, and the above-described "other components".

Water is contained as an essential component of the present composition, functions as a solvent or a dispersion medium for the binder (A), and has a function of stably holding the binder (A) in the present composition. Therefore, it is possible to maintain an appropriate viscosity of the water-based coating composition and to maintain good workability of a spray, a brush, a roller, and the like. The content ratio of water in the present composition is usually 10 to 90% by mass, preferably 20 to 80% by mass, and more preferably 30 to 70% by mass from such a viewpoint.

### <Hydrophilic organic solvent>

The present composition may contain a hydrophilic organic solvent, if necessary.

Examples of the hydrophilic organic solvent include acetone, methyl alcohol, n-propyl alcohol, isopropyl alcohol, n-butyl alcohol, isobutyl alcohol, 2-butoxyethanol, 2-ethoxyethanol, 1-methoxy-2-propanol, 1-ethoxy-2-propanol, ethyl alcohol, 2-methoxyethanol, diacetone alcohol, dioxane, ethylene glycol, ethylene glycol diethyl ether, ethylene glycol dimethyl ether, ethylene glycol monoethyl ether, ethylene glycol monopropyl ether, ethylene glycol monobutyl ether, and ethylene glycol monohexyl ether.

The hydrophilic organic solvent may be used singly or in combination of two or more types thereof.

A case where the present composition contains a hydrophilic organic solvent is preferable because the solubility and dispersibility of the above (B) to (E) in water are improved, the wettability of the present composition with respect to an object to be coated (substrate) is improved, and the drying property and curability of the coating film are improved. However, a case where the amount of the hydrophilic organic solvent added is large is not preferable in terms of environmental restrictions such as reduction of a volatile organic compound (VOC), although the solubility and dispersibility of the above (B) to (E) in water are improved. The content ratio of the hydrophilic organic solvent in the present composition is usually less than 15% by mass, preferably less than 10% by mass, and more preferably less than 5% by mass from such a viewpoint. The content ratio of an organic solvent including the hydrophilic organic solvent in the present composition is also usually less than 15% by mass, preferably less than 10% by mass, and more preferably less than 5% by mass.

### <Pigment volume concentration (PVC)>

The present composition has a pigment volume concentration (PVC) of preferably 70% or more, more preferably 70 to 90%, still more preferably 75 to 85%. In the present invention, the pigment volume concentration (PVC) refers to a concentration expressing the ratio (volume basis) of a pigment component and solid particles in an additive in the solid content of the present composition in terms of a percentage. PVC = [total volume of all pigment components + total volume of solid particles in additive] / [volume of solid content in coating composition] x 100 (%)

Examples of the "pigment component" include the zinc-based powder (B), the aluminum phosphate-based compound (C), the conductive pigment (D), and the pigment (E). Examples of the solid content in the coating composition other than the pigment component include the binder (A) and solid particles in an additive.

In calculating PVC, the volume of each component is calculated from the mass of each component and a true density thereof (hereinafter, also referred to simply as "density").

The volume of the solid content (nonvolatile content) in the present composition can be calculated from the mass and density of the solid content of the present composition. The mass and density may be measured values or values calculated from raw materials used.

The volume of the pigment component can be calculated from the mass and density of the pigment component used. The mass and density may be measured values or values calculated from raw materials used. For example, the mass and density can be calculated by separating the pigment component from the other components in the nonvolatile content of the present composition and measuring the mass and density of the separated pigment component. The same applies to solid particles in an additive.

### <Use and the like of anti-rust coating composition>

The present composition is preferably used as a primary anti-rust coating composition mainly in coating of a steel material for a large structure such as a ship, a marine structure, a plant, a bridge, or an overland tank. The primary anti-rust coating composition is required to protect a steel material during a construction period from rust without interfering with fusing, welding, and the like in a step of constructing a large structure.

A substrate such as the steel material is usually coated with the primary anti-rust coating composition to form a primary anti-rust coating film. The substrate coated is, for example, blasted under conditions corresponding to a rust removal degree of Sa2 1/2 or higher according to ISO 8501-1.

Furthermore, a surface of the anti-rust coating film formed from the present composition can be top-coated with a coating such as an epoxy resin-based coating, a chlorinated rubber-based coating, an oil-based coating, an epoxy ester-based coating, a polyurethane resin-based coating, a polysiloxane resin-based coating, a fluororesin-based coating, an acrylic resin-based coating, a vinyl resin-based coating, or an inorganic zinc-based coating to form a top coating film. The anti-rust coating film also has excellent adhesiveness to the top coating film.

### [Anti-rust coating composition kit]

The anti-rust coating composition kit of the present invention (hereinafter, also referred to as "the present kit") includes a first agent comprising the binder (A) comprising silica nanoparticles and water, and a second agent comprising at least one zinc-based powder (B) selected from a zinc powder and a zinc alloy powder.

Here, at least one selected from the first agent and the second agent comprises the aluminum phosphate-based compound (C), and at least one selected from the first agent and the second agent comprises the conductive pigment (D).

In the total amount of the present kit, the mass ratio [(B)/{(C) + (D)}] of the zinc-based powder (B) to the total of the aluminum phosphate-based compound (C) and the conductive pigment (D) is 0.1 to 7.0, preferably 0.5 to 7.0, and more preferably 1.0 to 6.0.

At least one selected from the first agent and the second agent preferably comprises the pigment (E). The second agent preferably comprises the zinc-based powder (B), the aluminum phosphate-based compound (C), and the conductive pigment (D), and more preferably further comprises the pigment (E).

The first agent is usually a water-based binder comprising the binder (A) and water. The content ratio of SiO₂ in the first agent (or water-based binder) is usually 0.5 to 50.0% by mass, preferably 1.0 to 30.0% by mass, and more preferably 2.0 to 15.0% by mass. The content ratio of SiO₂ in the solid content (or the binder (A)) of the first agent is preferably 50 to 95% by mass, and more preferably 60 to 90% by mass.

At least one selected from the first agent and the second agent can contain the other components described above.

The content ratio of each component in the first agent and the second agent can be appropriately set such that the content ratio of each component when the first agent and the second agent are mixed to prepare the present composition is within the range described in the column of [Anti-rust coating composition].

The present composition can be easily prepared by mixing the first agent and the second agent constituting the present kit.

### [Anti-rust coating film, primary anti-rust coating film, substrate with anti-rust coating film, and method for producing the same]

The substrate with an anti-rust coating film of the present invention includes a substrate and an anti-rust coating film and/or a primary anti-rust coating film formed on the substrate. Here, the anti-rust coating film and the primary anti-rust coating film are formed from the present composition or the present kit.

The average dry film thickness of the anti-rust coating film and/or the primary anti-rust coating film formed from the present composition or the present kit, as measured by an electromagnetic film thickness meter, is usually 30 um or less, and preferably 5 to 25 µm.

A method for producing a substrate with an anti-rust coating film according to the present invention includes [1] a step of coating a substrate with the present composition, and [2] a step of curing the present composition with which the substrate has been coated to form an anti-rust coating film on the substrate.

Examples of the substrate include iron and steel such as iron, steel, alloy iron, carbon steel, mild steel, or alloy steel, and specific examples thereof include a steel material such as the above-described steel material for a large structure. The substrate is preferably blasted under conditions corresponding to a rust removal degree of Sa2 1/2 or higher according to ISO 8501-1, if necessary.

The present composition is obtained, for example, by mixing the first agent and the second agent constituting the present kit.

Examples of a method for coating a substrate with an anti-rust coating composition include a method for applying an anti-rust coating composition onto a substrate and a method for impregnating a substrate with an anti-rust coating composition and then taking out the substrate. The method for applying an anti-rust coating composition is not particularly limited, and a conventionally known method such as an air spray or an airless spray can be applied.

As a coating machine, generally, when coating is performed at a shipyard, a steel mill, or the like, an airless spray or a line coating machine is mainly used. The line coating machine manages a film thickness according to coating conditions such as a line speed, a coating pressure of an air spray, an airless spray, or the like installed inside the coating machine, and the size of a spray tip (caliber).

The anti-rust coating composition is applied onto a substrate and then cured. A curing method is not particularly limited, and a conventionally known curing method can be applied. For example, when the anti-rust coating composition applied onto a substrate is left in the air, water in the composition and a hydrophilic organic solvent optionally contained are volatilized to cure the composition. At this time, the coating film may be heated and dried, if necessary. Examples of a heating method include a method using a tunnel type heating system with a combustion gas, an oil burner, heating wire heating, induction heating, a far-infrared heating device, or the like, a direct heating method using a gas or an oil burner, and a method using infrared irradiation or an induction heating system.

### Examples

The present invention will be described in more detail with reference to Examples below, but the present invention is not limited only to these Examples.

Raw materials used in Examples and the like are as follows.
- Inorganic/organic hybrid water-based binder
   "Dynasylan SIVO140":
   manufactured by Evonik Japan Co., Ltd.
   (SiO₂ content ratio 14.25% by mass,
   solid content concentration 22.5% by mass, density 1.1 g/cm³)
- Aqueous silica sol "Snowtex AK-L":
   manufactured by Nissan Chemical Corporation (SiO₂ content ratio 20.5% by mass,
   solid content concentration 21.2% by mass, density 1.0 g/cm³)
- Surface conditioner "TEGO Twin 4000":
   manufactured by Evonik Japan Co., Ltd. (density 1.0 g/cm³)
- Zinc powder "F-2000":
   manufactured by Honjo Chemical Co., Ltd. (density 7.1 g/cm³)
- Aluminum dihydrogen tripolyphosphate (molybdic acid treatment)
   "LF Bowsei PM-303W":
   manufactured by Kikuchi Color & Chemicals Corporation (density 3.0 g/cm³)
- Aluminum dihydrogen tripolyphosphate (Si•Zn treatment)
   "K-WHITE #84":
   manufactured by Tayca Corporation (density 3.1 g/cm³)
- Aluminum dihydrogen tripolyphosphate (Ca•Zn treatment)
   "K-WHITE CZ610":
   manufactured by Tayca Corporation (density 2.5 g/cm³)
- Aluminum dihydrogen tripolyphosphate (Mg treatment)
   "K-WHITE G105":
   manufactured by Tayca Corporation (density 2.6 g/cm³)
- Zinc oxide "Zinc oxide grade #3":
   manufactured by Hakusui Tech Co., Ltd. (density 5.8 g/cm³)
- Potassium feldspar "Ceramics powder OF-T":
   manufactured by Kinsei Matec Co., Ltd. (density 2.7 g/cm³)
- Kaolin "Satintone W":
   manufactured by BASF (density 2.6 g/cm³)
- Silica powder "QZ-SW": manufactured by Goto Kozan Co. Ltd. (density 2.7 g/cm³)
- Calcium molybdate "LF Bowsei MC-400WR":
   manufactured by Kikuchi Color & Chemicals Corporation (density 3.2 g/cm³)
- Zinc phosphate "LF Bowsei ZP-N":
   manufactured by Kikuchi Color & Chemicals Corporation (density 3.3 g/cm³)
- Tricalcium phosphate "Calcium tertiary phosphate":
   manufactured by Taihei Chemical Industrial Co., Ltd. (density 2.7 g/cm³)

The pigment composition of the raw materials is as illustrated in Table 1.

**[Table 1]**

| Table 1 Pigment composition (% by mass) | | | | | | | | |
|---|---|---|---|---|---|---|---|---|
| Component | Name of component | LF Bowsei PM-303W | K-WHITE #84 | K-WHITE CZ610 | K-WHITE G105 | LF Bowsei MC-400WR | LF Bowsei ZP-N | Calcium tertiary phosphate |
| (C) | Aluminum dihydrogen tripolyphosphate | 60.0 | 55.0 | 40.0 | 75.0 | 0.0 | 0.0 | 0.0 |
| (D) | Zinc oxide | 17.5 | 30.0 | 15.0 | 0.0 | 10.0 | 0.0 | 0.0 |
| (E) | Calcium molybdate | 0.0 | 0.0 | 0.0 | 0.0 | 10.0 | 0.0 | 0.0 |
| (E) | Zinc phosphate | 15.0 | 0.0 | 0.0 | 0.0 | 0.0 | 100.0 | 0.0 |
| (E) | Calcium tertiary phosphate | 0.0 | 0.0 | 0.0 | 0.0 | 0.0 | 0.0 | 100.0 |
| (E) | Others | 7.5 | 15.0 | 45.0 | 25.0 | 80.0 | 0.0 | 0.0 |
| Total | | 100.0 | 100.0 | 100.0 | 100.0 | 100.0 | 100.0 | 100.0 |

### [Preparation Example 1]

### Preparation of first agent

A container was charged with 14.7 parts by mass Dynasylan SIVO140 as an inorganic/organic hybrid water-based binder, 6.3 parts by mass of Snowtex AK-L as an aqueous silica sol, 20.0 parts by mass of deionized water, and 0.06 parts by mass of TEGO Twin 4000 as a surface conditioner, and the resulting mixture was stirred at 25°C for one hour to prepare (A-1) as the first agent.

Furthermore, (A-2) to (A-4) were prepared by performing a similar operation to the preparation of the (A-1) except that the charge amounts of the raw materials were changed so as to satisfy the ratios illustrated in Table 2.

**[Table 2]**

| Table 2: Preparation of first agent | | | | | | |
|---|---|---|---|---|---|---|
| | | | A-1 | A-2 | A-3 | A-4 |
| Charge amount (parts by mass) | Inorganic/organic hybrid water-based binder | Dynasylan SIVO140 | 14.7 | 18.9 | 27.3 | 27.0 |
| | Aqueous silica sol | SnowtexAK-L | 6.3 | 8.1 | 11.7 | |
| | Deionized water | Demineralized Water | 20.0 | 16.0 | 8.0 | 16.8 |
| | Surface conditioner | TEGO Twin 4000 | 0.06 | 0.06 | 0.06 | 0.06 |
| | (Total) | | 41.06 | 43.06 | 47.06 | 43.86 |
| Content ratio of SiO₂ in first agent (% by mass) | | | 8.2 | 10.1 | 13.4 | 8.8 |
| Solid content concentration in first agent (% by mass) | | | 11.5 | 14.0 | 18.5 | 14.0 |
| Content ratio of SiO₂ in solid content of first agent (% by mass) | | | 72.0 | 72.2 | 72.4 | 62.7 |

### [Examples 1 to 26 and Comparative Examples 1 to 8]

### Preparation of anti-rust coating composition

A polyethylene container was charged with the first agent and materials of each powders (second agent) at the ratios (parts by mass) illustrated in Tables 3-1 to 3-3, and the resulting mixture was dispersed with a high-speed disper for five minutes to prepare an anti-rust coating composition.

### [Table 3-1]

**Table 3-1**

| | | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|
| | | A-1 | | | | | | | | | | |
| | | A-2 | 43.0 | 43.0 | 43.0 | 43.0 | 43.0 | 43.0 | 43.0 | 43.0 | 43.0 | 43.0 |
| | First agent | A-3 | | | | | | | | | | |
| | | A-4 | | | | | | | | | | |
| | | (Subtotal) | 43.0 | 43.0 | 43.0 | 43.0 | 43.0 | 43.0 | 43.0 | 43.0 | 43.0 | 43.0 |
| | | F-2000 | 32.3 | 32.3 | 32.3 | 32.3 | 32.3 | 32.3 | 32.3 | 32.3 | 32.3 | 32.3 |
| | | LF Bowsei PM-303W | 12.0 | 12.0 | 12.0 | 12.0 | 12.0 | 20.0 | 17.0 | 6.0 | 3.0 | |
| | | K-WHITE #84 | | | | | | | | | | |
| Coating composition | | K-WHITE CZ610 | | | | | | | | | | |
| | | K-WHITE G105 | | | | | | | | | | |
| | Second agent (powder composition) | Zinc oxide nrade #3 | 3.8 | 5.5 | 7.2 | 8.9 | 10.5 | 3.8 | 3.8 | 3.8 | 3.8 | 3.8 |
| | | Ceramics powder OF-T | 8.9 | 7.2 | 5.5 | 3.8 | 2.2 | 0.9 | 3.9 | 14.9 | 17.9 | 20.9 |
| | | Satintone W | | | | | | | | | | |
| | | QZ-SW | | | | | | | | | | |
| | | LF Bowsei MC-400WR | | | | | | | | | | |
| | | LF Bowsei ZP-N | | | | | | | | | | |
| | | Calcium tertiary phosphate | | | | | | | | | | |
| | | (Subtotal) | 57.0 | 57.0 | 57.0 | 57.0 | 57.0 | 57.0 | 57.0 | 57.0 | 57.0 | 57.0 |
| | Total | | 100.0 | 100.0 | 100.0 | 100.0 | 100.0 | 100.0 | 100.0 | 100.0 | 100.0 | 100.0 |
| | PVC% | | 79.8 | 79.3 | 78.9 | 78.4 | 77.9 | 79.3 | 79.5 | 80.1 | 80.3 | 80.5 |
| | (B)Content ratio (in coatinn film) % by mass | | 51.3 | 51.3 | 51.3 | 51.3 | 51.3 | 51.3 | 51.3 | 51.3 | 51.3 | 51.3 |
| | (C)Content ratio (in coating film) % by mass | | 11.4 | 11.4 | 11.4 | 11.4 | 11.4 | 19.0 | 16.2 | 5.7 | 2.9 | 0.0 |
| Coating properties | (D)Content ratio (in coating film) % by mass | | 9.4 | 12.1 | 14.8 | 17.5 | 20.0 | 11.6 | 10.8 | 7.7 | 6.9 | 6.0 |
| | (E)Content ratio (in coatinn film) % by mass | | 18.4 | 15.7 | 13.0 | 10.3 | 7.8 | 8.6 | 12.3 | 25.8 | 29.5 | 33.2 |
| | Content ratio of SiO2 (in coating film) % by mass | | 6.9 | 6.9 | 6.9 | 6.9 | 6.9 | 6.9 | 6.9 | 6.9 | 6.9 | 6.9 |
| | (B)/{(C) + (D) + (E)} | | 1.3 | 1.3 | 1.3 | 1.3 | 1.3 | 1.3 | 1.3 | 1.3 | 1.3 | 1.3 |
| | (B)/{(C) + (D)} | | 2.5 | 2.2 | 2.0 | 1.8 | 1.6 | 1.7 | 1.9 | 3.8 | 5.3 | 8.5 |
| | | Outdoor exposure anti-rust properties | 10 | 10 | 10 | 10 | 10 | 10 | 10 | 10 | 10 | 9 |
| Evaluation | | Salt water spraying anticorrosive properties | 9 | 10 | 10 | 10 | 10 | 9 | 9 | 9 | 8 | 5 |
| | | Electric anticorrosion test | B | B | B | A | A | A | A | B | B | D |
| | | Weldability | A | A | A | A | A | A | A | A | A | A |

### [Table 3-2]

**Table 3-2**

| | | | Example 10 | Example 11 | Example 12 | Example 13 | Example 14 | Example 15 | Example 16 | Example 17 | Example 18 | Comparative Example 2 | Comparative Example 3 | Comparative Example 4 |
|---|---|---|---|---|---|---|---|---|---|---|---|---|---|---|
| | | A-1 | 33.0 | 40.0 | 42.0 | | | | | | | 33.0 | | |
| | | A-2 | | | | 36.0 | 43.0 | 45.0 | | | | | 43.0 | 43.0 |
| | First agent | A-3 | | | | | | | 41.0 | 49.0 | 51.0 | | | |
| | | A-4 | | | | | | | | | | | | |
| | | (Subtotal) | 33.0 | 400 | 42.0 | 36.0 | 43.0 | 45.0 | 41.0 | 49.0 | 51.0 | 33.0 | 43.0 | 43.0 |
| | | F-2000 | 55.2 | 33.0 | 26.0 | 53.2 | 32.3 | 25.0 | 49.0 | 30.0 | 24.0 | 60.2 | 32.3 | 32.3 |
| | | LF Bowsei PM-303W | 6.0 | 6.0 | 6.0 | 6.0 | 6.0 | 6.0 | 6.0 | 6.0 | 6.0 | 3.0 | 1.0 | 3.0 |
| | | K-WHITE #84 | | | | | | | | | | | | |
| Coating composition | | K-WHITE CZ610 | | | | | | | | | | | | |
| | | K-WHITE G105 | | | | | | | | | | | | |
| | Second agent (powder composition) | Zinc oxide grade #3 | 3.8 | 3.8 | 3.8 | 3.8 | 3.8 | 3.8 | 3.8 | 3.8 | 3.8 | 3.8 | 3.8 | 1.0 |
| | | Ceramics powder OF-T | 2.0 | 17.2 | 22.2 | 1.0 | 14.9 | 20.2 | 0.2 | 11.2 | 15.2 | | 19.9 | 20.7 |
| | | Satintone W | | | | | | | | | | | | |
| | | QZ-SW | | | | | | | | | | | | |
| | | LF Bowsei MC-400WR | | | | | | | | | | | | |
| | | LF Bowsei ZP-N | | | | | | | | | | | | |
| | | Calcium tertiary phosphate | | | | | | | | | | | | |
| | | (Subtotal) | 67.0 | 60.0 | 58.0 | 64.0 | 57.0 | 55.0 | 59.0 | 51.0 | 49.0 | 67.0 | 57.0 | 57.0 |
| | Total | | 100.0 | 100.0 | 100.0 | 100.0 | 100.0 | 100.0 | 100.0 | 100.0 | 100.0 | 100.0 | 100.0 | 100.0 |
| | PVC% | | 84.8 | 85.1 | 85.2 | 79.8 | 80.1 | 80.6 | 70.7 | 70.0 | 70.4 | 83.5 | 80.4 | 81.0 |
| | (B)Content ratio (in coating film) % by mass | | 78.0 | 51.1 | 41.4 | 77.1 | 51.3 | 40.8 | 73.6 | 50.0 | 41.1 | 85.1 | 51.3 | 51.3 |
| | (C)Content ratio (in coating film) % by mass | | 5.1 | 5.6 | 5.7 | 5.2 | 5.7 | 5.9 | 5.4 | 6.0 | 6.2 | 2.5 | 1.0 | 2.9 |
| Coating properties | (D)Content ratio (in coating film) % bv mass | | 6.9 | 7.5 | 7.7 | 7.0 | 7.7 | 7.9 | 7.3 | 8.1 | 8.3 | 6.1 | 63 | 24 |
| | (E)Content ratio (in coating film) % by mass | | 4.7 | 28.7 | 37.5 | 3.4 | 25.8 | 35.2 | 2.3 | 20.9 | 28.3 | 1.0 | 31.9 | 33.9 |
| | Content ratio of SiO2 (in coating film) % by mass | | 3.8 | 5.1 | 5.5 | 5.3 | 6.9 | 7.4 | 8.2 | 10.9 | 11.7 | 3.8 | 6.9 | 6.9 |
| | (B)/{(C) + (D) + (E)} | | 4.7 | 1.2 | 0.8 | 4.9 | 1.3 | 0.8 | 4.9 | 1.4 | 1.0 | 8.9 | 1.3 | 1.3 |
| | (B)/{(C) + (D)} | | 6.5 | 3.9 | 3.1 | 6.3 | 3.8 | 3.0 | 5.8 | 3.6 | 2.8 | 9.8 | 7.1 | 9.7 |
| Evaluation | | Outdoor exposure anti-rust properties | 10 | 10 | 9 | 10 | 10 | 9 | 10 | 9 | 9 | 10 | 9 | 6 |
| | Salt water spraying anticorrosive properties | 10 | 10 | 9 | 10 | 9 | 9 | 10 | 9 | 8 | 10 | 6 | 7 | |
| | Electric anticorrosion test | A | A | B | A | B | B | B | B | B | A | C | B | |
| | Weldability | A | S | S | A | A | A | B | A | A | C | A | A | |

### [Table 3-3]

**Table 3-3**

| | | | Example 19 | Example 20 | Example 21 | Example 22 | Example 23 | Example 24 | Example 25 | Comparative Example 5 | Comparative Example 6 | Comparative Example 7 | Example 26 | Comparative Example 8 |
|---|---|---|---|---|---|---|---|---|---|---|---|---|---|---|
| | | A-1 | | | | | | | | | | | | |
| | | A-2 | 43.0 | 43.0 | 43.0 | 43.0 | 43.0 | 43.0 | 43.0 | 43.0 | 43.0 | 43.0 | | 43.0 |
| | First agent | A-3 | | | | | | | | | | | | |
| | | A-4 | | | | | | | | | | | 43.0 | |
| | | (Subtotal) | 43.0 | 43.0 | 43.0 | 43.0 | 43.0 | 43.0 | 43.0 | 43.0 | 43.0 | 43.0 | 43.0 | 43.0 |
| | | F-2000 | 32.3 | 32.3 | 32.3 | 32.3 | 32.3 | 32.3 | 32.3 | 32.3 | 32.3 | 32.3 | 32.3 | 32.3 |
| | | LF Bowsei PM-303W | 12.0 | 12.0 | 6.0 | | | | | | | | 12.0 | |
| Coating composition | | K-WHITE #84 | | | | 12.0 | | | | | | | | |
| | | K-WHITE CZ610 | | | | | 12.0 | | | | | | | |
| | | K-WHITE G105 | | | | | | 12.0 | 12.0 | | | | | 12.0 |
| | Second agent (powder composition) | Zinc oxide nrade #3 | 3.8 | 3.8 | 3.8 | 3.8 | 3.8 | 3.8 | 3.8 | 5.0 | 3.8 | 5.0 | 3.8 | |
| | | Ceramics powder OF-T | | | | 8.9 | 8.9 | 8.9 | | 7.7 | 8.9 | 7.7 | 8.9 | 12.7 |
| | | Satintone W | | 8.9 | 14.9 | | | | 8.9 | | | | | |
| | | QZ-SW | 8.9 | | | | | | | | | | | |
| | | LF Bowsei MC-400WR | | | | | | | | | 12.0 | | | |
| | | LF Bowsei ZP-N | | | | | | | | 12.0 | | | | |
| | | Calcium tertiary phosphate | | | | | | | | | | 12.0 | | |
| | | (Subtotal) | 57.0 | 57.0 | 57.0 | 57.0 | 57.0 | 57.0 | 57.0 | 57.0 | 57.0 | 57.0 | 57.0 | 57.0 |
| | Total | | 100.0 | 100.0 | 100.0 | 100.0 | 100.0 | 100.0 | 100.0 | 100.0 | 100.0 | 100.0 | 100.0 | 100.0 |
| | PVC% | | 79.8 | 79.8 | 80.2 | 79.6 | 80.8 | 80.6 | 80.6 | 79.0 | 79.5 | 80.0 | 78.6 | 81.5 |
| | (B)Content ratio (in coating film) % by mass | | 51.3 | 51.3 | 51.3 | 51.3 | 51.3 | 51.3 | 51.3 | 51.3 | 51.3 | 51.3 | 51.3 | 51.3 |
| | (C)Content ratio (in coatinn film) % by mass | | 11.4 | 11.4 | 5.7 | 10.5 | 7.6 | 14.3 | 14.3 | 0.0 | 0.0 | 0.0 | 11.4 | 14.3 |
| Coating properties | (D)Content ratio (in coatinn film) % by mass | | 9.4 | 9.4 | 7.7 | 11.7 | 8.9 | 6.0 | 6.0 | 7.9 | 7.9 | 7.9 | 9.4 | 0.0 |
| | (E)Content ratio (in coatinn film) % by mass | | 18.4 | 18.4 | 25.8 | 17.0 | 22.7 | 18.9 | 18.9 | 31.3 | 31.3 | 31.3 | 18.4 | 24.9 |
| | Content ratio of SiO2 (in coatinn film) % by mass | | 6.9 | 6.9 | 6.9 | 6.9 | 6.9 | 6.9 | 6.9 | 6.9 | 6.9 | 6.9 | 6.0 | 6.9 |
| | (B)/{(C) + (D) + (E)} | | 1.3 | 1.3 | 1.3 | 1.3 | 1.3 | 1.3 | 1.3 | 1.3 | 1.3 | 1.3 | 1.3 | 1.3 |
| | (B)/{(C) + (D)} | | 2.5 | 2.5 | 3.8 | 2.3 | 3.1 | 2.5 | 2.5 | 6.5 | 6.5 | 6.5 | 2.5 | 3.6 |
| | | Outdoor exposure anti-rust properties | 9 | 10 | 9 | 9 | 9 | 8 | 10 | 9 | 10 | 5 | 8 | 5 |
| Evaluation | | Salt water spraying anticorrosive properties | 9 | 8 | 8 | 8 | 8 | 8 | 8 | 9 | 4 | 4 | 9 | 8 |
| | | Electric anticorrosion test | B | A | A | B | B | A | S | C | D | D | B | B |
| | | Weldability | A | A | A | A | A | A | A | A | A | A | A | A |

### [Evaluation method/evaluation criteria]

### (1) Outdoor exposure anti-rust properties

A structural steel plate (JIS G3101: 2015, SS400, dimensions: 150 mm × 70 mm × 2.3 mm, sandblasted) was coated with each of the anti-rust coating compositions obtained in Examples and Comparative Examples such that a dry film thickness thereof was 15 um. The dry film thickness was measured using an electromagnetic film thickness meter "LE-370" (manufactured by Kett Electric Laboratory). Subsequently, the composition with which the structural steel plate had been coated was dried in a constant temperature and humidity chamber at a temperature of 23°C and a relative humidity of 50% for seven days in accordance with the standard of JIS K5600-1-6: 2016 to prepare a test plate having an anti-rust coating film formed on the structural steel plate.

The test plate was placed on an outdoor exposure table (on the premises of Otake Research Institute of Chugoku Marine Paints, Ltd.) and left for three months. The test plate was fixed in a state where the coating surface of the test plate was facing south and the test plate was inclined so as to be 45 degrees with respect to the horizontal. An area ratio (%) of a surface of the test plate that had caused rusting with respect to the entire surface of the test plate was measured after the test plate was left for two months. A rusting state was evaluated according to the criteria of American Society for Testing and Materials (ASTM) standard D-610 as follows, and a score of 7 or higher was evaluated to be acceptable.

### [Evaluation criteria for rusting state (ASTM D610)]

10: No rusting is observed, or an area ratio of rusting is 0.01% or less
9: An area ratio of rusting is more than 0.01% and 0.03% or less
8: An area ratio of rusting is more than 0.03% and 0.1% or less
7: An area ratio of rusting is more than 0.1% and 0.3% or less
6: An area ratio of rusting is more than 0.3% and 1% or less
5: An area ratio of rusting is more than 1% and 3% or less
4: An area ratio of rusting is more than 3% and 10% or less
3: An area ratio of rusting is more than 10% and 16% or less
2: An area ratio of rusting is more than 16% and 33% or less
1: An area ratio of rusting is more than 33% and 50% or less
0: An area ratio of rusting is more than 50% and 100% or less

### (2) Salt water spraying anticorrosive properties

A test plate was prepared in a similar manner to the evaluation of outdoor exposure anti-rust properties. The obtained test plate was put in a spray cabinet with a temperature of 35°C ± 2°C in accordance with JIS K5600-7-1: 2016, and a sodium chloride aqueous solution (concentration 5%) was continuously sprayed on an anti-rust coating film of the test plate. A rusting state of the anti-rust coating film 300 hours after the start of spraying was evaluated according to the criteria of ASTM standard D-610 in a similar manner to the outdoor exposure anti-rust properties, and a score of 7 or higher was evaluated to be acceptable.

### (3) Electric anticorrosion test

A test plate was prepared in a similar manner to the evaluation of outdoor exposure anti-rust properties. The anti-rust coating film of the obtained test plate was coated with "CMP NOVA 2000" (manufactured by Chugoku Marine Paints, Ltd.), which is a high-solid epoxy coating, by spraying with an air spray gun so as to have a dry film thickness of about 320 um. Subsequently, the test plate was dried in an atmosphere of a temperature of 23°C and a relative humidity of 50% for seven days to form a test plate with a top coating film. The dry film thickness was measured using an electromagnetic film thickness meter "LE-370" (manufactured by Kett Electric Laboratory).

A zinc anode was connected to the test plate with a topcoat coating such that an electric current density was 5 mA/m² or less. A scribe with a depth reaching the steel plate was inserted into the test plate in a width direction thereof, and the test plate was immersed in 3% salt water at 40°C for 180 days. Thereafter, the size of peeling of the top coating film from the scribe was evaluated according to the following evaluation criteria. Evaluation B or higher (the size of peeling was less than 20 mm) was evaluated to be acceptable.

### [Size of peeling and evaluation criteria]

S: less than 10 mm
A: 10mm or more and less than 15mm
B: 15 mm or more and less than 20 mm
C: 20 mm or more and less than 30 mm
D: 30 mm or more

### (4) Weldability test

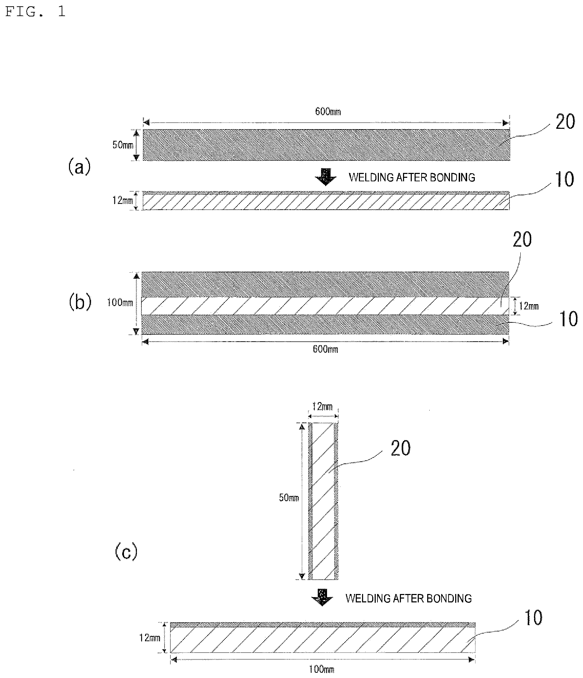

Surfaces of two sandblasted plates (JIS G3101: 2015, SS400, lower plate dimensions: 600 mm × 100 mm × 12 mm, upper plate dimensions: 600 mm × 50 mm × 12 mm) were coated with each of the anti-rust coating compositions obtained in Examples and Comparative Examples using a line coating machine such that the dry film thickness thereof was 15 um. The dry film thickness was measured using an electromagnetic film thickness meter "LE-370" (manufactured by Kett Electric Laboratory). Subsequently, the composition with which the sandblasted plates had been coated was dried in a constant temperature and humidity chamber at a temperature of 23°C and a relative humidity of 50% for seven days in accordance with the standard of JIS K5600-1-6: 2016 to prepare an upper plate and a lower plate as illustrated in Fig. 1(a). In Figs. 1(a) to 1(c), the densely shaded portion of the sandblasted plates indicates a coating portion.

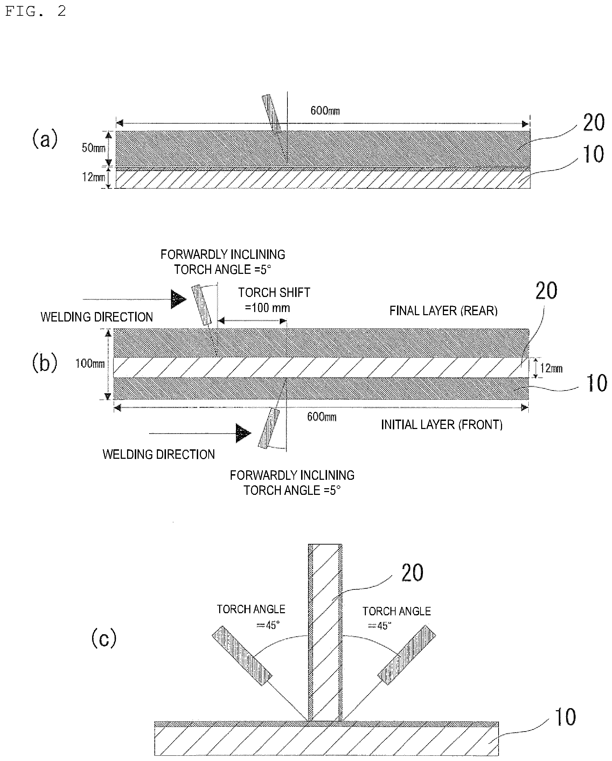

Subsequently, by a carbon dioxide automatic arc welding method, as illustrated in Figs. 2(a) to 2(c), both layers (an initial layer side and a final layer side) of the upper plate and the lower plate were welded simultaneously while a predetermined torch angle and torch shift were maintained. Table 4 illustrates welding conditions at this time.

### [Table 4]

**Table 4**

| Welding method | Twin single method |
|---|---|
| Welding speed (mm/min) | 600 |
| Current (A) | 320 |
| Voltage (V) | 32 |
| Welding wire | MX Z-200, φ1.2 mm |
| Torch angle | 45°, forwardly inclining 5° |
| Torch shift (mm) | 100 |
| Wire protruding length (mm) | 25 |
| Root gap | 0 |

Weldability was evaluated as follows. A laser notch (V-shaped cut) was made in a weld line on the initial layer side. A welding portion on the final layer side was broken by a press along the weld line. The total area of blow holes generated in a break surface (width of blow hole × length thereof × number thereof) was divided by an evaluation area to calculate a blow hole occurrence ratio (%). Evaluation B or higher (blow hole occurrence ratio was less than 10%) was evaluated to be acceptable.

### [Blow hole occurrence ratio and evaluation criteria]

S: less than 1%
A: 1% or more and less than 5%
B: 5% or more and less than 10%
C: 10% or more

### [Evaluation of Examples/Comparative Examples]

Tables 3-1 to 3-3 indicate the following points.

An anti-rust coating composition containing the aluminum phosphate-based compound (C) had better salt water spraying anticorrosive properties and electric anticorrosion resistance than an anti-rust coating composition containing no aluminum phosphate-based compound (C) (Examples 1 and 6 to 9, and Comparative Example 1). When an anti-rust pigment other than the aluminum phosphate-based compound (C) was used, it was difficult to achieve all of outdoor exposure anti-rust properties, salt water spraying anticorrosive properties, and electric anticorrosion resistance (Examples 1 and 22 to 25, and Comparative Examples 5 to 7).

An anti-rust coating composition containing zinc oxide of the conductive pigment (D) had better outdoor exposure anti-rust properties than an anti-rust coating composition containing no zinc oxide of the conductive pigment (D)

### (Examples 1 to 5 and 24, and Comparative example 8).

When the mass ratio [(B)/{(C) + (D)}] was 7.0 or less, excellent outdoor exposure anti-rust properties, salt water spraying anticorrosive properties, electric anticorrosion resistance, and weldability were obtained. However, when the mass ratio [(B)/{(C) + (D)}] was larger than 7.0, one or more of outdoor exposure anti-rust properties, salt water spraying anticorrosive properties, electric anticorrosion resistance, and weldability were poor (Examples and Comparative Examples 2 to 4). Furthermore, when kaolin was used as the pigment (E), the electric anticorrosion resistance was better (comparison between Example 20 and Examples 1 and 19 and comparison between Example 25 and Example 24).

### Reference Signs List

- 10: Sandblasted plate (lower plate)
- 20: Sandblasted plate (upper plate)

## Claims

1. An anti-rust coating composition comprising:
a binder (A) comprising silica nanoparticles;
at least one zinc-based powder (B) selected from a zinc powder and a zinc alloy powder;
an aluminum phosphate-based compound (C);
a conductive pigment (D); and
water, wherein the mass ratio [(B)/{(C) + (D)}] of the zinc-based powder (B) to the total of the aluminum phosphate-based compound (C) and the conductive pigment (D) is 0.1 to 7.0 and wherein the conductive pigment (D) is zinc oxide.

2. The anti-rust coating composition according to claim 1, further comprising a pigment (E) other than the zinc-based powder (B), the aluminum phosphate-based compound (C), and the conductive pigment (D).

3. The anti-rust coating composition according to claim 2, wherein the mass ratio [(B)/{(C) + (D) + (E)}] of the zinc-based powder (B) to the total of the aluminum phosphate-based compound (C), the conductive pigment (D), and the pigment (E) is 0.5 to 5.5.

4. The anti-rust coating composition according to any one of claims 1 to 3, wherein a content ratio of the zinc-based powder (B) is 80% by mass or less in a solid content of the anti-rust coating composition.

5. The anti-rust coating composition according to any one of claims 1 to 4, having a pigment volume concentration (PVC) of 70% or more.

6. The anti-rust coating composition according to any one of claims 1 to 5, which is a primary anti-rust coating composition.

7. An anti-rust coating composition kit comprising:
a first agent comprising a binder (A) comprising silica nanoparticles and water; and
a second agent comprising at least one zinc-based powder (B) selected from a zinc powder and a zinc alloy powder, wherein
at least one selected from the first agent and the second agent comprises an aluminum phosphate-based compound (C), and at least one selected from the first agent and the second agent comprises a conductive pigment (D) which is zinc oxide, and
in the total amount of the anti-rust coating composition kit, the mass ratio [(B)/{(C) + (D)}] of the zinc-based powder (B) to the total of the aluminum phosphate-based compound (C) and the conductive pigment (D) is 0.1 to 7.0.

8. The anti-rust coating composition kit according to claim 7, wherein at least one selected from the first agent and the second agent further comprises a pigment (E) other than the zinc-based powder (B), the aluminum phosphate-based compound (C), and the conductive pigment (D).

9. The anti-rust coating composition kit according to claim 7 or 8, wherein the second agent comprises the zinc-based powder (B), the aluminum phosphate-based compound (C), and the conductive pigment (D).

10. An anti-rust coating film formed from the anti-rust coating composition according to any one of claims 1 to 5 or the anti-rust coating composition kit according to any one of claims 7 to 9.

11. A primary anti-rust coating film formed from the anti-rust coating composition according to claim 6 or the anti-rust coating composition kit according to any one of claims 7 to 9.

12. A substrate with an anti-rust coating film, comprising a substrate and the anti-rust coating film according to claim 10 or the primary anti-rust coating film according to claim 11 formed on the substrate.

13. A method for producing a substrate with an anti-rust coating film, the method comprising:
[1] a step of coating a substrate with the anti-rust coating composition according to any one of claims 1 to 6 or a mixture obtained by mixing the first agent and the second agent of the anti-rust coating composition kit according to any one of claims 7 to 9; and
[2] a step of curing the anti-rust coating composition or the mixture with which the substrate has been coated to form an anti-rust coating film on the substrate.

## Patentansprüche

1. Rostschutzbeschichtungszusammensetzung, umfassend:
ein Bindemittel (A), umfassend Siliciumdioxidnanopartikel,
mindestens ein zinkbasiertes Pulver (B), ausgewählt aus einem Zinkpulver und einem Zinklegierungspulver,
eine aluminiumphosphatbasierte Verbindung (C),
ein leitfähiges Pigment (D) und
Wasser, wobei
das Massenverhältnis [(B)/{(C) + (D)}] des zinkbasierten Pulvers (B) zur Gesamtmenge der aluminiumphosphatbasierten Verbindung (C) und des leitfähigen Pigments (D) 0,1 bis 7,0 beträgt und wobei das leitfähige Pigment (D) Zinkoxid ist.

2. Rostschutzbeschichtungszusammensetzung gemäß Anspruch 1, ferner umfassend ein Pigment (E) außer dem zinkbasierten Pulver (B), der aluminiumphosphatbasierten Verbindung (C) und dem leitfähigen Pigment (D).

3. Rostschutzbeschichtungszusammensetzung gemäß Anspruch 2, wobei das Massenverhältnis [(B)/{(C) + (E)}] des zinkbasierten Pulvers (B) zur Gesamtmenge der aluminiumphosphatbasierten Verbindung (C), des leitfähigen Pigments (D) und des Pigments (E) 0,5 bis 5,5 beträgt.

4. Rostschutzbeschichtungszusammensetzung gemäß einem der Ansprüche 1 bis 3, wobei ein Gehaltsanteil des zinkbasierten Pulvers (B) 80 Masse-% oder weniger in einem Feststoffgehalt der Rostschutzbeschichtungszusammensetzung beträgt.

5. Rostschutzbeschichtungszusammensetzung gemäß einem der Ansprüche 1 bis 4, die eine Pigmentvolumenkonzentration (PVC) von 70 % oder mehr aufweist.

6. Rostschutzbeschichtungszusammensetzung gemäß einem der Ansprüche 1 bis 5, die eine primäre Rostschutzbeschichtungszusammensetzung ist.

7. Rostschutzbeschichtungszusammensetzungsset, umfassend:
ein erstes Mittel, umfassend ein Bindemittel (A), umfassend Siliciumdioxidnanopartikel und Wasser, und
ein zweites Mittel, umfassend mindestens ein zinkbasiertes Pulver (B), ausgewählt aus einem Zinkpulver und einem Zinklegierungspulver, wobei
mindestens eines, ausgewählt aus dem ersten Mittel und dem zweiten Mittel, eine aluminiumphosphatbasierte Verbindung (C) umfasst und mindestens eines, ausgewählt aus der Gruppe, bestehend aus dem ersten Mittel und dem zweiten Mittel, ein leitfähiges Pigment (D) umfasst, das Zinkoxid ist, und
in der Gesamtmenge des Rostschutzbeschichtungszusammensetzungssets das Massenverhältnis [(B)/{(C) + (D)}] des zinkbasierten Pulvers (B) zu der Gesamtmenge der aluminiumphosphatbasierten Verbindung (C) und des leitfähigen Pigments (D) 0,1 bis 7,0 beträgt.

8. Rostschutzbeschichtungszusammensetzungsset gemäß Anspruch 7, wobei mindestens eines, ausgewählt aus dem ersten Mittel und dem zweiten Mittel, ferner ein Pigment (E) außer dem zinkbasierten Pulver (B), der aluminiumphosphatbasierten Verbindung (C) und dem leitfähigen Pigment (D) umfasst.

9. Rostschutzbeschichtungszusammensetzungsset gemäß Anspruch 7 oder 8, wobei das zweite Mittel das zinkbasierte Pulver (B), die aluminiumphosphatbasierte Verbindung (C) und das leitfähige Pigment (D) umfasst.

10. Rostschutzbeschichtungsfilm, der aus der Rostschutzbeschichtungszusammensetzung gemäß einem der Ansprüche 1 bis 5 oder dem Rostschutzbeschichtungszusammensetzungsset gemäß einem der Ansprüche 7 bis 9 gebildet ist.

11. Primärer Rostschutzbeschichtungsfilm, der aus der Rostschutzbeschichtungszusammensetzung gemäß Anspruch 6 oder dem Rostschutzbeschichtungszusammensetzungsset gemäß einem der Ansprüche 7 bis 9 gebildet ist.

12. Substrat mit einem Rostschutzbeschichtungsfilm, umfassend ein Substrat und den
Rostschutzbeschichtungsfilm gemäß Anspruch 10 oder den primären Rostschutzbeschichtungsfilm gemäß Anspruch 11, der auf dem Substrat gebildet ist.

13. Verfahren zur Herstellung eines Substrats mit einem Rostschutzbeschichtungsfilm, wobei das Verfahren umfasst:
[1] einen Schritt zum Beschichten eines Substrats mit der Rostschutzbeschichtungszusammensetzung gemäß einem der Ansprüche 1 bis 6 oder einer Mischung, die durch Mischen des ersten Mittels und des zweiten Mittels des Rostschutzbeschichtungszusammensetzungssets gemäß einem der Ansprüche 7 bis 9 erhalten wird, und
[2] einen Schritt zum Härten der Rostschutzbeschichtungszusammensetzung oder der Mischung, mit der das Substrat beschichtet wurde, um einen Rostschutzbeschichtungsfilm auf dem Substrat zu bilden.

## Revendications

1. Composition de revêtement anti-rouille comprenant :
un liant (A) comprenant des nanoparticules de silice ;
au moins une poudre à base de zinc (B) choisie parmi une poudre de zinc et une poudre d'alliage de zinc ;
un composé à base de phosphate d'aluminium (C) ;
un pigment conducteur (D) ; et
de l'eau, dans laquelle
le rapport massique [(B)/{(C) + (D)}] de la poudre à base de zinc (B) au total du composé à base de phosphate d'aluminium (C) et du pigment conducteur (D) est de 0,1 à 7,0 et dans lequel le pigment conducteur (D) est de l'oxyde de zinc.

2. Composition de revêtement anti-rouille selon la revendication 1, comprenant en outre un pigment (E) autre que la poudre à base de zinc (B), le composé à base de phosphate d'aluminium (C), et le pigment conducteur (D).

3. Composition de revêtement anti-rouille selon la revendication 2, dans laquelle le rapport massique [(B)/{(C) + (D) + (E)}] de la poudre à base de zinc (B) au total du composé à base de phosphate d'aluminium (C), du pigment conducteur ( D), et du pigment (E) est de 0,5 à 5,5.

4. Composition de revêtement anti-rouille selon l'une quelconque des revendications 1 à 3, dans laquelle le rapport de teneur en poudre à base de zinc (B) est de 80 % en masse ou moins dans une teneur en solides de la composition de revêtement anti-rouille.

5. Composition de revêtement anti-rouille selon l'une quelconque des revendications 1 à 4, présentant une concentration volumique de pigment (PVC) de 70 % ou plus.

6. Composition de revêtement anti-rouille selon l'une quelconque des revendications 1 à 5, qui est une composition de revêtement anti-rouille primaire.

7. Kit de composition de revêtement anti-rouille comprenant :
un premier agent comprenant un liant (A) comprenant des nanoparticules de silice et de l'eau ; et
un deuxième agent comprenant au moins une poudre à base de zinc (B) choisie parmi une poudre de zinc et une poudre d'alliage de zinc, dans lequel
au moins un élément choisi parmi le premier agent et le deuxième agent comprend un composé à base de phosphate d'aluminium (C), et au moins un élément choisi parmi le premier agent et le deuxième agent comprend un pigment conducteur (D) qui est de l'oxyde de zinc, et
dans la quantité totale du kit de composition de revêtement anti-rouille, le rapport massique [(B)/{(C) + (D)}] de la poudre à base de zinc (B) au total du composé à base de phosphate d'aluminium (C) et du pigment conducteur (D) est de 0,1 à 7,0.

8. Kit de composition de revêtement anti-rouille selon la revendication 7, dans lequel au moins un agent choisi parmi le premier agent et le deuxième agent comprend en outre un pigment (E) autre que la poudre à base de zinc (B), le composé à base de phosphate d'aluminium (C), et le pigment conducteur (D).

9. Kit de composition de revêtement anti-rouille selon la revendication 7 ou la revendication 8, dans lequel le deuxième agent comprend la poudre à base de zinc (B), le composé à base de phosphate d'aluminium (C), et le pigment conducteur (D).

10. Film de revêtement anti-rouille formé à partir de la composition de revêtement anti-rouille selon l'une quelconque des revendications 1 à 5 ou du kit de composition de revêtement anti-rouille selon l'une quelconque des revendications 7 à 9.

11. Film de revêtement anti-rouille primaire formé à partir de la composition de revêtement anti-rouille selon la revendication 6 ou du kit de composition de revêtement anti-rouille selon l'une quelconque des revendications 7 à 9.

12. Substrat avec un film de revêtement anti-rouille, comprenant un substrat et le film de revêtement anti-rouille selon la revendication 10 ou le film de revêtement anti-rouille primaire selon la revendication 11 formé sur le substrat.

13. Procédé de production d'un substrat avec un film de revêtement anti-rouille, le procédé comprenant :
[1] une étape de revêtement d'un substrat avec la composition de revêtement anti-rouille selon l'une quelconque des revendications 1 à 6 ou un mélange obtenu en mélangeant le premier agent et le deuxième agent du kit de composition de revêtement anti-rouille selon l'une quelconque des revendications 7 à 9 ; et
[2] une étape de durcissement de la composition de revêtement anti-rouille ou du mélange avec lequel le substrat a été revêtu pour former un film de revêtement anti-rouille sur le substrat.
